# DEMANDE DE BREVET EUROPEEN

(11) **EP 1 875 799 A1**
(43) Date de publication de la demande: **09.01.2008**
(21) Numéro de dépôt: 07290846.0
(22) Date de dépôt: 05.07.2007
(51) Int. Cl.: A01G 27/06, A01G 27/04

(54) **Reserve d'eau autonome pour plantes**

(30) Priorité: 07.07.2006 FR 0606190
(71) Demandeur: Aquareservplant, 94200 Ivry sur Seine (FR); Yahyaoui, Fatiha, 30320 Poulx (FR)
(72) Inventeur: Yahyaoui, Fatiha, 30320 Poulx (FR)
(74) Mandataire: Gosse, Michel

(57) **Abrégé**

L'invention concerne une réserve d'eau (1) pour plantes destinée à contenir du terreau (2) et à y diffuser l'eau (3) qu'elle contient. Elle est réalisée en deux parties tronconiques emboitables (11) et (12) dont l'une (11), interne, comporte, dans son fond, des bouchons (4) destinés à la diffusion contrôlée de l'eau dans le terreau et dont l'autre (12), externe, comporte, latéralement, des fenêtres d'éclairage (5) destinées à indiquer le niveau minimum de l'eau.

La réserve d'eau selon l'invention se caractérise essentiellement en ce que:
- les fenêtres d'éclairage (5) sont associées à une cage qui assure le guidage de billes dans leur déplacement vertical entre des butées hautes où les fenêtres d'éclairage sont occultées et des butées basses où les fenêtres d'éclairage ne sont pas occultées.
- des fibres optiques (6), en relation avec chaque fenêtre d'éclairage (5), dont chaque extrémité débouche sur la paroi supérieure (13) de la partie externe tronconique (12) de ladite réserve en un point (14) constituant un voyant lumineux.

## Description

### DOMAINE DE L'INVENTION

L'invention concerne une réserve d'eau autonome pour plantes destinée à contenir du terreau, à diffuser l'eau qu'elle contient dans celui-ci de manière contrôlée et pouvant être utilisée soit intégrée dans un pot classique soit au lieu et place de celui-ci.

### ARRIERE PLAN TECHNOLOGIQUE

Les réserves d'eau pour plantes connues sont généralement intégrées dans les pots eux mêmes avec pour conséquence de privilégier le côté technique au détriment du côté esthétique et limitant bien évidemment le choix des modèles.

Or, dans la pratique, les plantes d'intérieur sont le plus souvent placées dans des pots décoratifs qui ne comportent pas de réserve d'eau ce qui pose un réel problème d'arrosage en cas d'absence, même de courte durée pour certaines plantes.

Une réserve d'eau qui solutionne simultanément les problèmes techniques liés à l'alimentation en eau continue et contrôlée de la plante et les problèmes esthétiques liés aux choix possibles de pots habituellement commercialisés est décrite dans la demande de brevet FR 2847422 du même déposant.

Malheureusement, lors de sa mise en oeuvre industrielle, de nombreuses difficultés sont apparues, notamment celles relatives :
- au choix du dispositif de diffusion de l'eau : les essais effectués au moyen de parois poreuses ou d'orifices pratiqués dans les parois de la réserve n'ayant pas permis de contrôler correctement la diffusion de l'eau dans le terreau ;
- au choix de la technique de fabrication par moulage de ladite réserve : les essais d'industrialisation effectués n'ayant pas permis de la fabriquer de manière simple et économique ;
- au choix d'un dispositif de contrôle du niveau de l'eau dans la réserve : les systèmes existants dans les pots traditionnels à réserve d'eau manquant d'originalité.

Une solution technique, à base de mousse de polyuréthane, relative à l'aspiration et à la diffusion de l'eau dans du terreau placé dans une réserve d'eau réalisée en deux parties tronconiques emboîtables, est enseignée dans le document WO 0167845.

Des solutions techniques relatives à la technique de fabrication par moulage de ce type de réserve d'eau, sont également enseignées dans l'état de la technique connue.

### RESUME DE L'INVENTION

L'invention vise donc à réaliser une réserve d'eau qui élimine les inconvénients sus mentionnés.

Elle concerne à cet effet une réserve d'eau qui est réalisée en deux parties tronconiques emboîtables dont l'une, interne, comporte, dans son fond, des bouchons destinés à la diffusion contrôlée de l'eau dans le terreau et l'autre, externe, comporte, latéralement, des fenêtres d'éclairage, associées à des fibres optiques, destinées à indiquer le niveau minimum de l'eau dans ladite réserve.

Concernant les deux parties tronconiques emboîtables :
- la partie externe comporte, sur son ouverture supérieure, une collerette sur laquelle est collée l'ouverture supérieure de la partie interne et, latéralement, des nervures destinées à assurer son centrage et son maintien par rapport à ladite partie interne ;
- la partie interne comporte, sous son fond, des nervures destinées à assurer son positionnement vertical par rapport au fond de ladite partie externe ;
- la partie interne comporte également, en partie supérieure, une portion de paroi verticale, ou inclinée, apte à former avec la partie externe supérieure de ladite réserve, l'ouverture d'alimentation en eau de celle-ci ; un couvercle emboîtable sur ladite ouverture pouvant être prévu pour l'obturer principalement à des fins sanitaires.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.
Sur ces dessins :

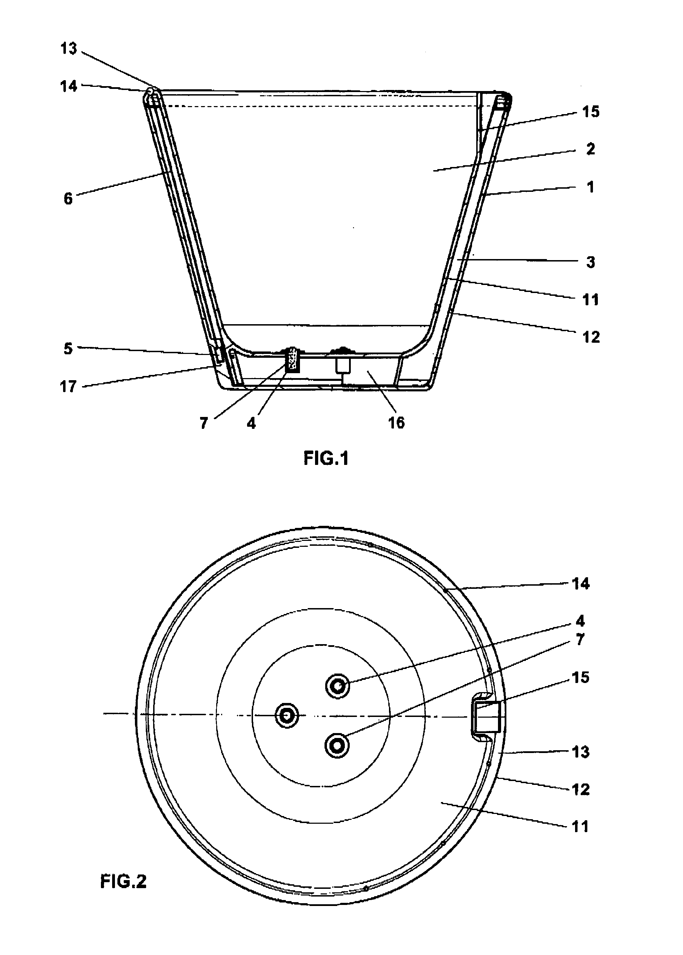

- la figure 1, représente, en coupe diamétrale, la réserve d'eau selon l'invention ;
- la figure 2, représente, en vue de dessus, la réserve d'eau selon la figure 1 ;

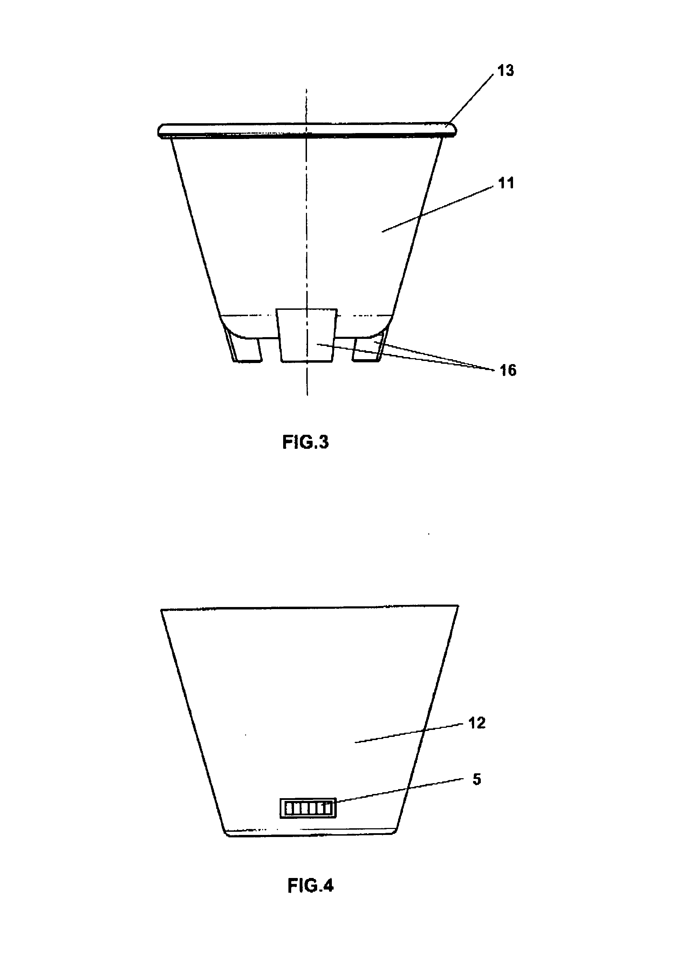

- la figure 3, représente, en vue de profil, la partie externe tronconique de la réserve d'eau selon l'invention ;
- la figure 4, représente, en vue de profil, la partie interne tronconique de la réserve d'eau selon l'invention mettant en évidence les fenêtres d'éclairage des fibres optiques ;

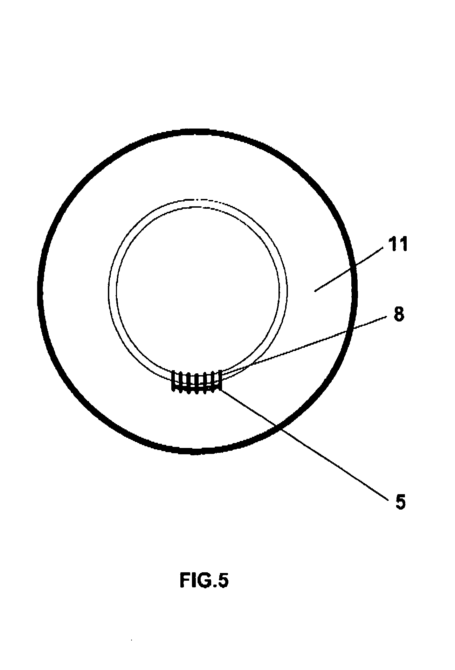

- la figure 5, représente, en vue de dessus, la partie interne tronconique selon la figure 4, mettant en évidence la cage de maintien des billes occultant ou non les fenêtres d'éclairage des fibres optiques.

### DESCRIPTION DETAILLEE DE L'INVENTION

La réserve d'eau (1) pour plantes représentée aux figures, est destinée à contenir du terreau (2) et à diffuser dans celui-ci l'eau (3) qu'elle contient.

Elle est réalisée en deux parties tronconiques emboîtables (11) et (12) dont l'une (11), interne, comporte, dans son fond, des bouchons (4) destinés à la diffusion contrôlée de l'eau dans le terreau et dont l'autre (12), externe, comporte, latéralement, des fenêtres d'éclairage (5) destinées à indiquer le niveau minimum de l'eau dans ladite réserve.

Les fenêtres d'éclairage (5) sont associées :
a) à une cage (8), située derrière lesdites fenêtres, qui assure le guidage de billes dans leur déplacement vertical entre des butées hautes où les fenêtres d'éclairage sont occultées (niveau d'eau situé au dessus de ladite fenêtre) et des butées basses où les fenêtres d'éclairage ne sont pas occultées (niveau d'eau situé au dessous de ladite fenêtre) laissant ainsi passer la lumière ;
b) à des fibres optiques (6), en relation avec chaque fenêtre d'éclairage (5), dont chaque extrémité débouche sur la paroi supérieure (13) de la partie externe tronconique (12) de ladite réserve en un point (14) constituant un voyant lumineux qui est éclairé lorsque les fenêtres d'éclairage ne sont pas occultées par les billes.

Chaque bouchon (4), qui est réalisé en mousse de polyuréthane, est maintenu par un support (7) qui traverse la paroi de fond de la partie interne tronconique (11) de ladite réserve.

La partie interne tronconique (11) comporte, sur son ouverture supérieure, une portion de paroi verticale (15), ou inclinée, apte à former avec la partie externe supérieure tronconique (12) de ladite réserve, l'ouverture d'alimentation en eau de celle-ci.

La partie interne tronconique (11) comporte, sous son fond, des nervures (16) destinées à assurer son positionnement vertical par rapport au fond de la partie externe (12) de ladite réserve.

La partie externe tronconique (12) comporte, sur son ouverture supérieure, une collerette (13) sous laquelle est collée l'ouverture supérieure de la partie interne tronconique (11) et, sur sa paroi interne inférieure, des nervures (17) destinées à assurer son centrage et son maintien latéral par rapport à la partie interne (11) de ladite réserve.

La réserve d'eau peut être :
- soit placée dans un pot à plantes classique ou dans un cache pot ;
caractérisée en ce qu'elle est
- soit être utilisée directement comme pot à plantes classique.
Elle peut être réalisée en matière plastique transparente ou non.

Bien entendu, l'invention n'est pas limitée aux modes de réalisations décrits et représentés pour lesquels on pourra prévoir d'autres variantes, en particulier dans :
- les formes et les dimensions des éléments constitutifs de la réserve d'eau ;
- les matériaux utilisés pour leur réalisation;
- la conception des moyens de remplissage et de positionnement et de centrage des deux parties tronconiques entre elles.

## Revendications

1. Réserve d'eau (1) pour plantes destinée à contenir du terreau (2) et à diffuser, dans celui-ci, l'eau (3) qu'elle contient; ladite réserve étant réalisée en deux parties tronconiques emboîtables (11) et (12) dont l'une (11), interne, comporte, dans son fond, des bouchons (4) destinés à la diffusion contrôlée de l'eau dans le terreau et dont l'autre (12), externe, comporte, latéralement, des fenêtres d'éclairage (5) destinées à indiquer le niveau minimum de l'eau dans ladite réserve ; **caractérisée en ce que** les fenêtres d'éclairage (5) sont associées :
a) à une cage (8), située derrière lesdites fenêtres, qui assure le guidage de billes dans leur déplacement vertical entre des butées hautes où les fenêtres d'éclairage sont occultées et des butées basses où les fenêtres d'éclairage ne sont pas occultées ;
b) à des fibres optiques (6), en relation avec chaque fenêtre d'éclairage (5), dont chaque extrémité débouche sur la paroi supérieure (13) de la partie externe tronconique (12) de ladite réserve en un point (14) constituant un voyant lumineux.

2. Réserve d'eau, selon la revendication 1, **caractérisée en ce que** chaque bouchon (4), qui est réalisé en mousse de polyuréthane, est maintenu par un support (7) qui traverse la paroi de fond de la partie interne tronconique (11) de ladite réserve.

3. Réserve d'eau, selon la revendication 1, **caractérisée en ce que** la partie interne tronconique (11) comporte, sur son ouverture supérieure, une portion de paroi verticale (15), ou inclinée, apte à former avec la partie externe supérieure tronconique (12) de ladite réserve, l'ouverture d'alimentation en eau de celle-ci.

4. Réserve d'eau, selon la revendication 1, **caractérisée en ce que** la partie interne tronconique (11) comporte, sous son fond, des nervures (16) destinées à assurer son positionnement vertical par rapport au fond de la partie externe (12) de ladite réserve.

5. Réserve d'eau, selon la revendication 1, **caractérisée en ce que** la partie externe tronconique (12) comporte, sur son ouverture supérieure, une collerette (13) sous laquelle est collée l'ouverture supérieure de la partie interne tronconique (11) et, sur sa paroi interne inférieure, des nervures (17) destinées à assurer son centrage et son maintien latéral par rapport à la partie interne (11) de ladite réserve.

6. Réserve d'eau, selon l'une quelconque des revendications 1 à 5, **caractérisée en ce qu'**elle est placée dans un pot à plantes classique ou dans un cache pot.

7. Réserve d'eau, selon l'une quelconque des revendications 1 à 5, **caractérisée en ce qu'**elle est utilisée directement comme pot à plantes classique.
